(19) **Europäisches Patentamt**
**European Patent Office**
**Office européen des brevets**

(11) **EP 4 082 979 A1**

(12) **EUROPEAN PATENT APPLICATION**
published in accordance with Art. 153(4) EPC

(43) Date of publication:
**02.11.2022 Bulletin 2022/44**

(21) Application number: **20906975.6**

(22) Date of filing: **21.12.2020**

(51) International Patent Classification (IPC):
**C03C 13/00** (2006.01)     **C03C 13/02** (2006.01)
**C03C 13/06** (2006.01)     **D01F 9/08** (2006.01)

(52) Cooperative Patent Classification (CPC):
**C03C 13/00; C03C 13/06; D01F 9/08;** Y02P 40/57

(86) International application number:
**PCT/JP2020/047597**

(87) International publication number:
**WO 2021/132120 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2019 JP 2019238724**

(71) Applicant: **Nichias Corporation**
**Tokyo 104-8555 (JP)**

(72) Inventors:
• **KITAHARA, Hideki**
**Tokyo 104-8555 (JP)**

• **MOCHIDA, Takahito**
**Tokyo 104-8555 (JP)**
• **MORISAKO, Shiyo**
**Tokyo 104-8555 (JP)**
• **YAMADA, Yohei**
**Tokyo 104-8555 (JP)**
• **SUGIMOTO, Ken**
**Tokyo 104-8555 (JP)**

(74) Representative: **Hamer, Christopher K. et al**
**Mathys & Squire**
**The Shard**
**32 London Bridge Street**
**London SE1 9SG (GB)**

(54) **INORGANIC FIBERS, INORGANIC FIBER PRODUCT, METHOD FOR MANUFACTURING INORGANIC FIBER PRODUCT, COMPOSITION FOR MANUFACTURING INORGANIC FIBERS, METHOD FOR MANUFACTURING INORGANIC FIBERS**

(57)     To provide an inorganic fiber and an inorganic fiber product in which heat resistance is high, an option of a raw material is wide, and productivity is high. An inorganic fiber contains at least one kind of alkali metal compound selected from the group consisting of Na, K, and Li, and a sulfur compound. A total amount A (% by mass) of alkali metal oxides expressed by $Na_2O$, $K_2O$, and $Li_2O$ and a weight S (% by mass) of a sulfur oxide expressed by $SO_3$ in terms of oxides satisfy the following Expression (1) or (2). An inorganic fiber product includes the inorganic fiber.

$$S \geq -0.38A + 2.4 \quad (A < 5\% \text{ by mass}) \quad (1) \tag{1}$$

$$S \geq 0.5 \quad (A \geq 5\% \text{ by mass}) \quad (2) \tag{2}$$

**(Cont. next page)**

# FIG. 1

**Description**

TECHNICAL FIELD

The present invention relates to an inorganic fiber, an inorganic fiber product, a method of manufacturing an inorganic fiber product, a composition for manufacturing an inorganic fiber, and a method of manufacturing an inorganic fiber.

BACKGROUND ART

Inorganic fibers represented by rock wool and glass wool have been used in various industries such as steel, petroleum, chemicals, electricity, automobiles, building materials, and aerospace for various usages such as refractory materials, heat insulating materials, and sealing materials, and are indispensable materials.

In the related art, slag-based rock wool blended with steel slag is fiberized and manufactured as follows. Specifically, natural stones such as silica stone, silica sand, and basalt are added to steel slag as a component adjusting agent, the resultant mixture is melted in a cupola or an electric furnace, and the melt is allowed to flow out from the bottom of the furnace. The melt is fiberized by a spinning method in which the melt is brought into contact with a high-speed rotating body, or a blowing method in which the melt is fiberized by compressed air.

Although the rock wool in the related art has higher heat resistance indicated by a heating shrinkage rate in comparison to typical glass wool, the rock wool is melted at approximately 800°C. Therefore, in the rock wool in the related art, a ratio of iron oxide in a fiber is increased by increasing a blending ratio of basalt containing iron oxide, converter slag, or the like, thereby improving heat resistance (refer to PATENT LITERATURE 1 and PATENT LITERATURE 2).

However, since iron oxide in a rock wool raw material is partially reduced in melting, metallic iron is deposited on the bottom of a melting furnace. Therefore, when the amount of iron increases in the rock wool raw material, the frequency of a work of periodically extracting the metallic iron increases. Due to this, time productivity of the rock wool is lowered, and thus it is necessary to significantly lower the blending ratio of iron oxide in the rock wool raw material from the viewpoint of production.

From the viewpoint, PATENT LITERATURE 3 discloses rock wool having high heat resistance even though the content of iron oxide is small. The rock wool contains 35% by mass to 45% by mass of $SiO_2$, 10% by mass to 15% by mass of $Al_2O_3$, 20% by mass to 35% by mass of CaO, 10% by mass to 25% by mass of MgO, and FeO and $Fe_2O_3$ in a total content of 2% by mass to 10% by mass. A molar ratio of divalent Fe atoms to the sum of divalent Fe atoms and trivalent Fe atoms is set to 0.8 or greater.

CITATION LIST

PATENT LITERATURE

PATENT LITERATURE 1: JP H6-45472 B
PATENT LITERATURE 2: JP H6-65617 B
PATENT LITERATURE 3: WO 2012/176799 A

SUMMARY OF INVENTION

TECHNICAL PROBLEM

In the rock wool described in PATENT LITERATURE 3, it is necessary to adjust the molar ratio of divalent Fe and trivalent Fe within a predetermined range, and thus a selectable raw material is limited. Accordingly, with regard to an inorganic fiber such as rock wool, it is desired to have high heat resistance even though the content of oxide iron is small, and it is desired to further raise productivity while expanding the option of a raw material.

In addition, the present inventors also found that there is a new problem of deterioration of productivity or limitation of a selectable raw material even in the case of adding a compound of transition metals other than Fe from the viewpoint of improving heat resistance of an inorganic fiber such as rock wool. Here, a search was made to find a method of improving heat resistance of an inorganic fiber by an approach different from the use of the compound of transition metals.

The invention has been made in consideration of the problem, and an object thereof is to provide an inorganic fiber in which heat resistance is high, an option of a raw material is wide, and productivity is high, an inorganic fiber product, a method of manufacturing an inorganic fiber product, a composition for manufacturing an inorganic fiber, and a method of manufacturing an inorganic fiber.

SOLUTION TO PROBLEM

The present inventors have made a thorough investigation. As a result, they newly found that when a total amount A (% by mass) of alkali metal oxides and a weight S (% by mass) of a sulfur oxide expressed by $SO_3$ are set within a predetermined range, an inorganic fiber having high heat resistance is obtained, and they accomplished the invention.

According to an inorganic fiber according to the invention, the inorganic fiber contains at least one kind of alkali metal compound selected from the group consisting of Na, K, and Li, and a sulfur compound. A total amount A (% by mass) of alkali metal oxides expressed by $Na_2O$, $K_2O$, and $Li_2O$ and a weight S (% by mass) of a sulfur oxide expressed by $SO_3$ in terms of oxides satisfy the following Expression (1) or (2). Accordingly, the above-described problem is solved.

$$S \geq -0.38A + 2.4 \quad (A < 5\% \text{ by mass}) \quad (1)$$

$$S \geq 0.5 \quad (A \geq 5\% \text{ by mass}) \quad (2)$$

At this time, the inorganic fiber may further contain 0.1% by mass to 5% by mass of transition metal compound.

At this time, the transition metal compound may be at least one kind of compound selected from the group consisting of Fe, Mn, Cu, Ni, Co, Zr, V, Nb, Mo, W, and Y.

At this time, the inorganic fiber may have a composition containing:

25% by mass to 45% by mass of $SiO_2$;
5% by mass to 25% by mass of $Al_2O_3$;
15% by mass to 50% by mass of CaO;
3% by mass to 20% by mass of MgO;
0.1% by mass to 5% by mass of transition metal compound;
0.5% by mass to 5% by mass of $SO_3$; and
1% by mass to 13% by mass of $Na_2O$, $K_2O$, and $Li_2O$.

At this time, the inorganic fiber may be at least one or more kinds selected from the group consisting of rock wool, stone wool, slag wool, mineral wool, glass wool, and mineral glass wool.

According to an inorganic fiber product according to the invention, the above-described inorganic fiber is included, and thus the above-described problem is solved.

At this time, the inorganic fiber product may be a heat insulating material or a refractory material.

According to a method of manufacturing an inorganic fiber product according to the invention, the method includes molding the inorganic fiber, and thus the above-described problem is solved.

According to a composition for manufacturing an inorganic fiber according to the invention, the composition contains at least one kind of alkali metal compound selected from the group consisting of Na, K, and Li, and a sulfur compound. A total amount A (% by mass) of alkali metal oxides expressed by $Na_2O$, $K_2O$, and $Li_2O$ and a weight S (% by mass) of a sulfur oxide expressed by $SO_3$ in terms of oxides satisfy the following Expression (1) or (2). Accordingly, the above-described problem is solved.

$$S \geq -0.38A + 2.4 \quad (A < 5\% \text{ by mass}) \quad (1)$$

$$S \geq 0.5 \quad (A \geq 5\% \text{ by mass}) \quad (2)$$

According to a method of manufacturing an inorganic fiber according to the invention, the method includes melting the composition for manufacturing an inorganic fiber and making the resultant melt into a fiber to obtain an inorganic fiber, and thus the above-described problem is solved.

ADVANTAGEOUS EFFECTS OF INVENTION

According to the invention, it is possible to provide an inorganic fiber in which heat resistance is high, an option of a raw material is wide, and productivity is high, an inorganic fiber product, a method of manufacturing an inorganic fiber product, a composition for manufacturing an inorganic fiber, and a method of manufacturing an inorganic fiber.

BRIEF DESCRIPTION OF DRAWINGS

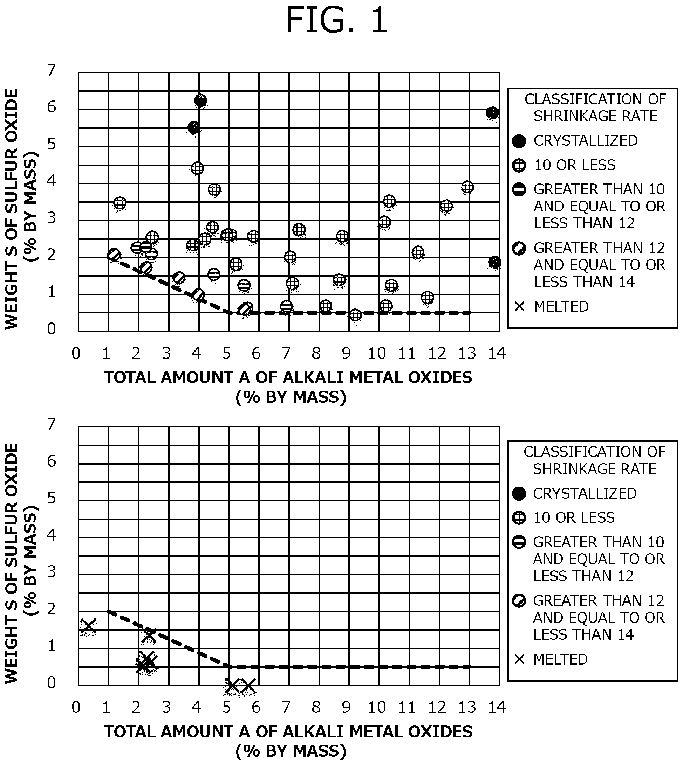

FIG. 1 is a graph obtained by extracting samples in which a heating shrinkage rate at 1110°C is 14% or less (upper drawing) and samples melted at 1110°C (lower drawing) among respective samples in Test 1, and by plotting a total amount A (% by mass) of alkali metal oxides in the horizontal axis, and a weight S (% by mass) of a sulfur oxide expressed by $SO_3$ in the vertical axis.

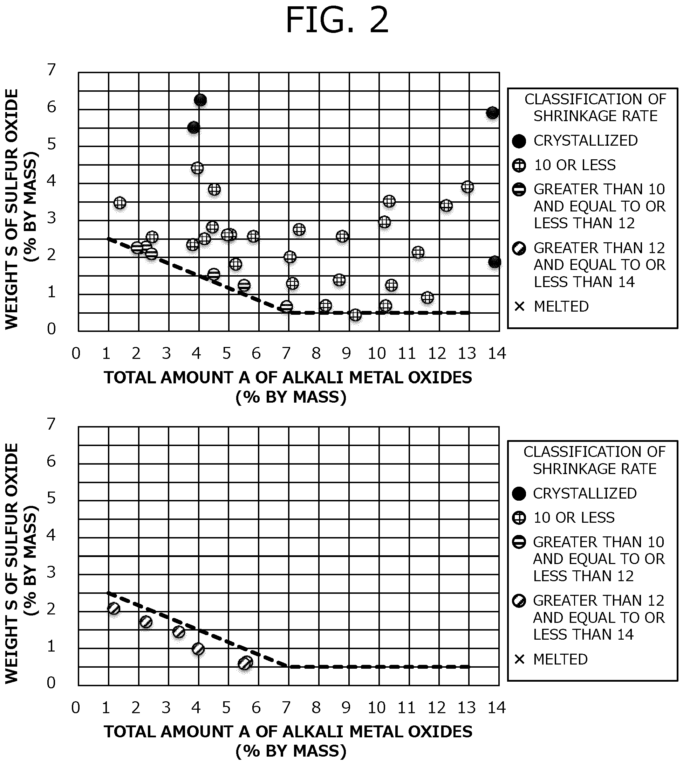

FIG. 2 is a graph obtained by extracting samples in which a heating shrinkage rate at 1110°C is 12% or less (upper drawing) and samples in which the heating shrinkage rate is greater than 12% and equal to or less than 14% (lower drawing) among respective samples in Test 1, and by plotting a total amount A (% by mass) of alkali metal oxides in the horizontal axis, and a weight S (% by mass) of a sulfur oxide expressed by $SO_3$ in the vertical axis.

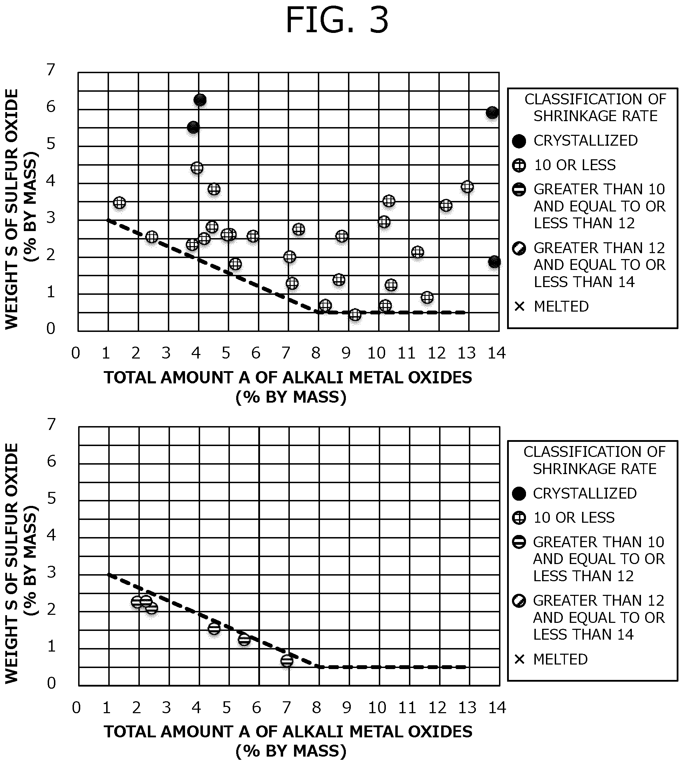

FIG. 3 is a graph obtained by extracting samples in which a heating shrinkage rate at 1110°C is 10% or less (upper drawing) and samples in which the heating shrinkage rate is greater than 10% and equal to or less than 12% (lower drawing) among respective samples in Test 1, and by plotting a total amount A (% by mass) of alkali metal oxides in the horizontal axis, and a weight S (% by mass) of a sulfur oxide expressed by $SO_3$ in the vertical axis.

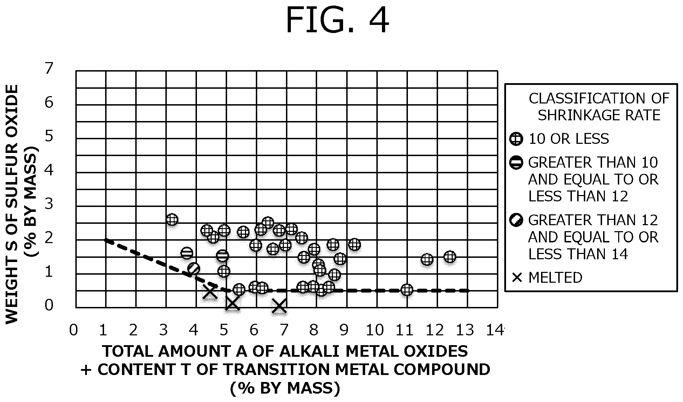

FIG. 4 is a graph obtained by extracting samples in which a heating shrinkage rate at 1110°C is 14% or less (upper drawing) and samples melted at 1110°C (lower drawing) among respective samples in Test 2, and by plotting a total amount A (% by mass) of alkali metal oxides + the content T (% by mass) of a transition metal compound in the horizontal axis, and a weight S (% by mass) of a sulfur oxide expressed by $SO_3$ in the vertical axis.

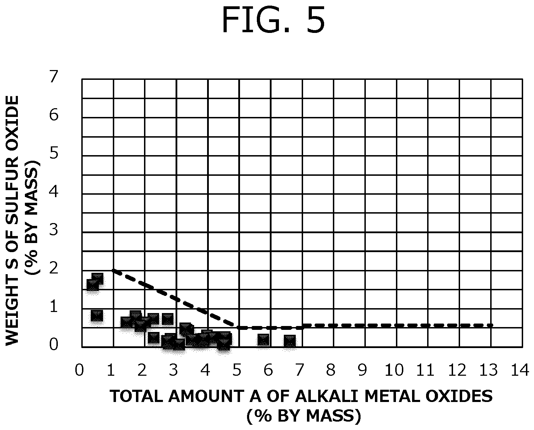

FIG. 5 is a graph obtained by plotting a total amount A (% by mass) of alkali metal oxides in the horizontal axis and a weight S (% by mass) of a sulfur oxide expressed by $SO_3$ in the vertical axis with respect to an existing inorganic fiber.

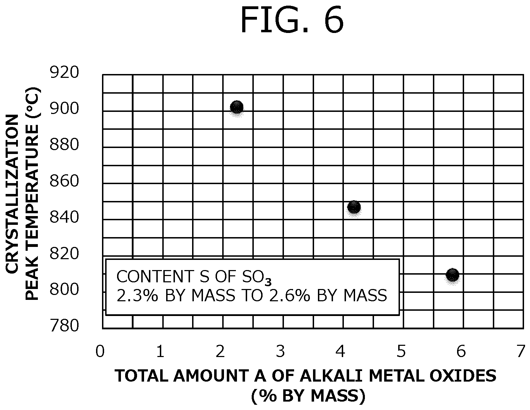

FIG. 6 is a graph obtained by extracting samples in which the weight S of the sulfur oxide expressed by $SO_3$ is 2.3% by mass to 2.6% by mass among the respective samples in Test 1, and by plotting the total amount A of the alkali metal oxides in the horizontal axis and a crystallization peak temperature in the vertical axis.

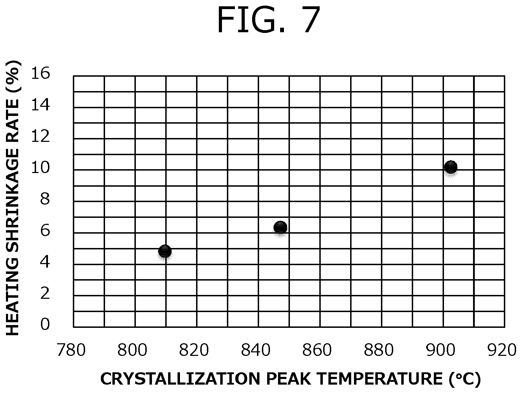

FIG. 7 is a graph obtained by plotting a crystallization peak temperature of respective samples in Test 4 in the horizontal axis and a heating shrinkage rate at 1110°C in the vertical axis.

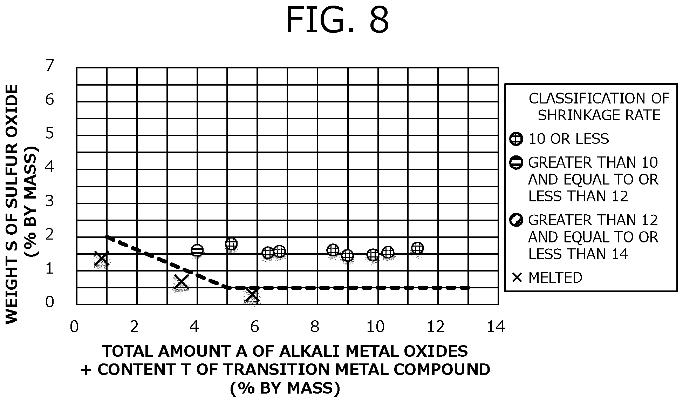

FIG. 8 is a graph obtained by plotting a total amount A (% by mass) of alkali metal oxides + the content T (% by mass) of a transition metal compound in the horizontal axis, and a weight S (% by mass) of a sulfur oxide expressed by $SO_3$ in the vertical axis with respect to respective inorganic fiber samples in Test 6.

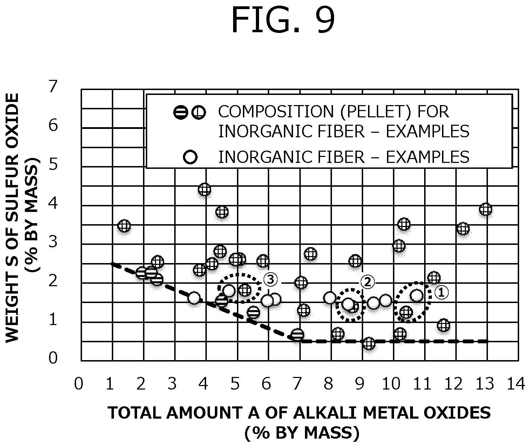

FIG. 9 is a graph obtained by plotting examples relating to an inorganic fiber in a graph of examples relating to a composition for an inorganic fiber.

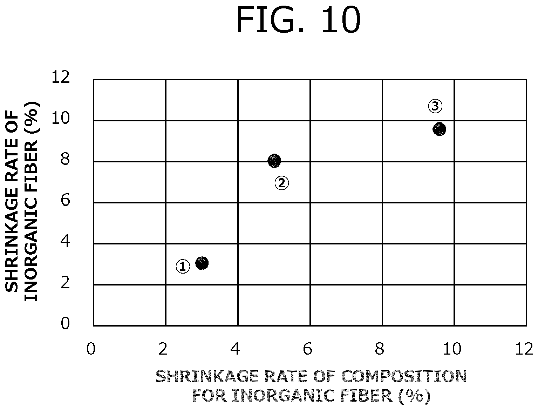

FIG. 10 is a graph obtained by comparing shrinkage rate with each other for examples of a composition for inorganic fibers having approximately the same composition and inorganic fibers.

DESCRIPTION OF EMBODIMENTS

Hereinafter, an embodiment (hereinafter, referred to as this embodiment) of the invention will be described with reference to FIG. 1 to FIG. 10. This embodiment relates to an inorganic fiber, an inorganic fiber product, a method of manufacturing an inorganic fiber product, a composition for manufacturing an inorganic fiber, and a method of manufacturing an inorganic fiber.

<Definition>

In this specification, ○% by mass to △% by mass represents equal to or greater than ○% by mass and equal to or less than △% by mass.

In this specification, the content of each component is noted in terms of an oxide, and can be measured by fluorescent X-ray analysis (XRF). Here, even though the content of each component is noted in terms of an oxide, it is not necessary for each of the component to be contained as an oxide. For example, each component (S, Fe, or Na) may not be contained as an oxide ($SO_3$, $Fe_2O_3$, or $Na_2O$), and respective components may be contained in a type of a compound such as a sulfide (FeS, $Na_2S$) and a sulfate ($FeSO_4$ or $Na_2SO_4$).

<Inorganic Fiber and Composition for Manufacturing Inorganic Fiber>

An inorganic fiber (ore fiber) of this embodiment is a fiber-shaped material that is mainly manufactured from various natural ores such as silica and andesite, raw materials such as clay, slag, and glass, or materials obtained by crushing the raw materials. Examples of the inorganic fiber include at least one or more kinds selected from the group consisting of rock wool, stone wool, slag wool, mineral wool, glass wool, and mineral glass wool. As the inorganic fiber of this embodiment, the rock wool or the slag wool is preferable from the viewpoint of heat resistance.

Here, the composition for manufacturing an inorganic fiber is a composition that becomes a raw material when manufacturing the inorganic fiber, and a state thereof is not particularly limited, and examples thereof include a state in which respective components exist as a mixed solidified material, a state in which respective components are melted, a state in which respective components exist as a powder, and the like.

The inorganic fiber and the composition for manufacturing an inorganic fiber of this embodiment contain at least one kind of alkali metal compound selected from the group consisting of Na, K, and Li, and a sulfur compound, and contain at least one kind of alkali metal compound selected from the group consisting of Na, K, and Li, and a sulfur compound, and a total amount A (% by mass) of alkali metal oxides expressed by $Na_2O$, $K_2O$, and $Li_2O$ and a weight S (% by mass) of a sulfur oxide expressed by $SO_3$ in terms of oxides satisfy the following Expression (1) or (1'), or (2) or (2').

$$S \geq -0.38A + 2.4 \quad (A < 5\% \text{ by mass}) \quad (1)$$

$$S \geq 0.5 \quad (A \geq 5\% \text{ by mass}) \quad (2)$$

$$S > -0.38A + 2.4 \quad (A < 5\% \text{ by mass}) \quad (1')$$

$$S > 0.5 \quad (A \geq 5\% \text{ by mass}) \quad (2')$$

In addition, the inorganic fiber and the composition for manufacturing an inorganic fiber preferably satisfy the following Expression (3) or (3') or (4) or (4').

$$S \geq -0.33A + 2.8 \quad (A < 7\% \text{ by mass}) \quad (3)$$

$$S \geq 0.5 \quad (A \geq 7\% \text{ by mass}) \quad (4)$$

$$S > -0.33A + 2.8 \quad (A < 7\% \text{ by mass}) \quad (3')$$

$$S > 0.5 \quad (A \geq 7\% \text{ by mass}) \quad (4')$$

In addition, the inorganic fiber and the composition for manufacturing an inorganic fiber more preferably satisfy the following Expression (5) or (5') or (6) or (6').

$$S \geq -0.36A + 3.4 \quad (A < 8\% \text{ by mass}) \quad (5)$$

$$S \geq 0.5 \quad (A \geq 8\% \text{ by mass}) \quad (6)$$

$$S > -0.36A + 3.4 \quad (A < 8\% \text{ by mass}) \quad (5')$$

$$S > 0.5 \quad (A \geq 8\% \text{ by mass}) \quad (6')$$

A lower limit value of the weight S (% by mass) of the sulfur oxide expressed by $SO_3$ in terms of an oxide is 0.5% by mass, preferably 1% by mass, and more preferably 2% by mass, and an upper limit value thereof may be 5% by mass. When the weight S (% by mass) of the sulfur oxide is less than 0.5% by mass, an effect of improving heat resistance is not exhibited. In addition, when the weight S (% by mass) of the sulfur oxide is greater than 5% by mass, there is a possibility that crystallization is likely to occur and embrittlement may occur.

A lower limit value of the total amount A (% by mass) of alkali metal oxides expressed by $Na_2O$, $K_2O$, and $Li_2O$ in terms of an oxide is 1% by mass, preferably 2% by mass, and more preferably 3% by mass, and an upper limit value thereof may be 13% by mass. When the total amount A (% by mass) of the alkali metal oxides is less than 2% by mass, the effect of improving heat resistance is slightly inferior, and when the total amount A is less than 1% by mass, the effect of improving heat resistance is not exhibited. When the total amount A (% by mass) of the alkali metal oxides is greater than 13% by mass, there is a possibility that crystallization is likely to occur and embrittlement may occur.

(Content (T) of Transition Metal Compound)

The inorganic fiber and the composition for manufacturing an inorganic fiber according to this embodiment may contain a transition metal compound. Since the transition metal compound is combined with a sulfur compound to generate a crystal nucleus as in the alkali metal compounds such as Na, the transition metal compound can function as a component that improves heat resistance of the inorganic fiber.

Accordingly, the content T (% by mass) of the transition metal compound plays an important role for the heat resistance of the inorganic fiber as in the alkali metal oxides. Actually, the present inventors found that a similar behavior as illustrated in FIG. 4 is obtained even when the horizontal axis in a relational diagram of the total amount A (% by mass) of the alkali metal oxides and the weight S (% by mass) of the sulfur oxide as illustrated in FIG. 1 is set as the total amount A (% by mass) of the alkali metal oxides + the content T (% by mass) of the transition metal compound.

That is, the present inventors found that in Expressions (1) to (6), the total amount A (% by mass) of the alkali metal oxides may be substituted with the total amount A (% by mass) of the alkali metal oxides + the content T (% by mass) of the transition metal compound.

In the inorganic fiber and the composition for manufacturing an inorganic fiber of this embodiment, when the sum of components contained in the inorganic fiber is set as 100% by mass, a lower limit value of the content T (% by mass) of the transition metal compound is 0.1% by mass or greater from the viewpoint of the heat resistance, preferably 1.0% by mass or greater, and more preferably 1.5% by mass or greater.

Here, since the transition metal compound in a raw material is partially reduced in melting and is deposited as a metal on the bottom of a melting furnace, it is preferable to suppress the amount of the transition metal compound to be low. Specifically, an upper limit value of the content T (% by mass) of the transition metal compound is 5% by mass or less from the viewpoint of productivity, preferably 4% by mass or less, more preferably 3% by mass or less, and still more preferably 2% by mass or less.

In the inorganic fiber and the composition for manufacturing an inorganic fiber of this embodiment, the transition metal compound is at least one kind of compound selected from the group consisting of Fe, Mn, Cu, Ni, Co, Zr, V, Nb, Mo, W, and Y. Compounds of Fe, Mn, Cu, Ni, Co, Zr, V, Nb, Mo, W, and Y react with sulfur to form a sulfide (FeS, MnS, CuS, NiS, CoS, or the like) or sulfate ($FeSO_4$, $MnSO_4$, $CuSO_4$, $NiSO_4$, $CoSO_4$, or the like) in a process of manufacturing the inorganic fiber or in use such as heating after being manufactured.

(Molar Basicity (P))

A molar basicity P is expressed by a molar ratio (mol% (CaO + MgO) /mol% ($SiO_2$ + $Al_2O_3$)) of the sum of CaO and MgO to the sum of $SiO_2$ and $Al_2O_3$. Specifically, when a total molar ratio of components contained in rock wool is set as 100 mol%, the molar basicity P is obtained by dividing the sum (mol%) of CaO and MgO by the sum (mol%) of $SiO_2$ and $Al_2O_3$.

The molar basicity P is a ratio between $SiO_2$ and $Al_2O_3$ which form a glass skeleton of the inorganic fiber, and CaO and MgO which divide the skeleton of the inorganic fiber, and is an index of safety of the skeleton of the inorganic fiber. In rock wool of this embodiment, the molar basicity P is 0.4 to 2.0, preferably 0.5 to 1.7, and more preferably 1.0 to 1.4 or 1.0 to 1.5.

When the molar basicity P is low, viscosity of the composition for manufacturing an inorganic fiber becomes excessively high, and thus the composition is not appropriately melted. As a result, there is a possibility that productivity may deteriorate. Note that, when the molar basicity P is high, there is a possibility that crystallization is likely to occur and embrittlement may occur, and thus the molar basicity P is preferably set within the above-described numerical range.

For example, the inorganic fiber and the composition for manufacturing an inorganic fiber have the following composition, but there is no limitation to the composition.

$SiO_2$: 25% by mass to 45% by mass, and preferably 25% by mass to 40% by mass

$Al_2O_3$: 5% by mass to 25% by mass, and preferably 10% by mass to 20% by mass

CaO: 15% by mass to 50% by mass, and preferably 30% by mass to 45% by mass

MgO: 3% by mass to 20% by mass, and preferably 5% by mass to 10% by mass

Transition metal compound: 0.1% by mass to 5% by mass, and preferably 1% by mass to 3% by mass

$SO_3$: 0.5% by mass to 5% by mass, preferably 1% by mass to 3% by mass, and more preferably 2% by mass to 3% by mass

$Na_2O + K_2O + Li_2O$: 1% by mass to 13% by mass, preferably 2% by mass to 13% by mass, and more preferably 3% by mass to 13% by mass

(Crystallization Peak Temperature)

In the inorganic fiber and the composition for manufacturing an inorganic fiber according to this embodiment, as illustrated in examples to be described later, when the content of an alkali metal increases, a crystallization peak temperature is lowered, and when the crystallization peak temperature is lowered, the heat resistance is improved. Accordingly, results supporting the technical idea of the invention are obtained. Here, the crystallization peak temperature is a temperature when components which constitute an inorganic fiber are crystallized, and can be obtained from a value of an exothermic peak at the time of temperature rising, for example, by a differential thermal analyzer (DTA) or differential scanning calorimetry (DSC). In this embodiment, for example, the crystallization peak temperature can be defined as an exothermic peak temperature when being heated up to 1000°C at a temperature rising rate of 20°C/minute by using the differential thermal analyzer (DTA).

In the inorganic fiber and the composition for manufacturing an inorganic fiber according to this embodiment, a softening and deforming temperature (softening point) is set to be higher than the crystallization peak temperature. That is, since microcrystals exist before the inorganic fiber is softened and deformed due to heating, softening does not proceed, and curvature and fusion of fibers do not occur even when being exposed to a high temperature.

Here, the softening point is a temperature at which the inorganic fiber and the composition for manufacturing an inorganic fiber start to be significantly softened and deformed, and can be measured and obtained, for example, by a method defined in JIS R 3103-1: 2001.

(Heating Shrinkage Rate)

When being measured by a method described in examples, a heating shrinkage rate of the composition for manufacturing an inorganic fiber according to this embodiment is 14% or less after heating at 1110°C, preferably 12% or less, more preferably 11% or less, and still more preferably 10% or less.

(Mechanism of Heat Resistance Exhibition)

A surface tension acts on a fiber surface of an inorganic fiber to reduce the surface as much as possible. When the fiber is softened and enters a deformation possible state, the fiber is thickened or deformed due to an influence of the surface tension. In addition, when softening of the fiber proceeds, fiber intersections are fused, and the fiber is finally melted. Heat resistance of an inorganic fiber and an inorganic fiber heat-insulating material becomes more excellent as a temperature at which a fiber shape is not changed and a shape as a heat insulating material having voids between fibers can be maintained is higher.

The inorganic fiber is amorphous in a non-heated state. Here, amorphous is a state in which atoms do not have a regular arrangement like a crystal, and crystalline is a stable structure in which atoms constituting a substance have spatial regularity, and are three-dimensionally periodically arranged with adjacent atoms.

Amorphous glass is softened and deformed when being heated from room temperature. However, a state of glass having a special composition, which is called crystallized glass, begins to vary from amorphous to crystalline before reaching a softening and deforming temperature, and thus the glass varies into an agglomerate of microcrystals without being softened and deformed.

Accordingly, with regard to curvature and fusion of an inorganic fiber, the present inventors have focused on importance of whether or not a crystalline state exists before being softened and deformed. Specifically, in the inorganic fiber of this embodiment, the present inventors found that when the total amount A (% by mass) of the alkali metal oxides expressed by $Na_2O$, $K_2O$, and $Li_2O$ and the weight S (% by mass) of the sulfur oxide expressed by $SO_3$ are within the above-described predetermined ranges, softening does not proceed due to existence of microcrystals before being softened and deformed due to heating, and even when being exposed to a high temperature of 1100°C or higher, curvature and fusion of the fiber does not occur.

The relational expression is expressed by Expression (1) or (1'), or (2) or (2'). Expression (1) represents that

8

the heat resistance is exhibited when sulfur and alkali metal oxides exist in a constant amount or greater, and it is assumed that a substance with which sulfur and an alkali metal can be combined acts as a crystal nucleus and crystallization occurs. Expression (2) represents that when an alkali metal oxide exists in a constant amount or greater, the heat resistance is exhibited even at a position at which the amount of sulfur is low.

It is easily assumed that when the total amount of sulfur and an alkali metal increases, a contact probability between these increases, the amount of crystal nuclei generated increases, and as a result, the heat resistance is enhanced. As a result of thorough examination, a preferable range and more preferable range can be found.

That is, as the preferable range, a range expressed by Expression (3) or (3'), or (4) or (4') was found. In addition, as the more preferable range, a range expressed by Expression (5) or (5'), or (6) or (6') was found.

<Method of Manufacturing Inorganic Fiber>

In a method of manufacturing an inorganic fiber according to this embodiment, a known method that has been used in manufacturing of an inorganic fiber in the related art can be used except that the composition (inorganic fiber raw material) for manufacturing an inorganic fiber which has the same composition as the above-described composition of the inorganic fiber.

The method of manufacturing an inorganic fiber according to this embodiment is characterized in that the composition for manufacturing an inorganic fiber is melted (melting process) and the resultant melt is fiberized (fiberization process) to obtain an inorganic fiber. More specifically, in the method of manufacturing an inorganic fiber according to the invention, the composition for manufacturing an inorganic fiber is melted in a cupola, an electric furnace, or the like, and the resultant melt is fiberized by spinning, blowing, or the like to obtain an inorganic fiber.

In the case of performing manufacturing of the inorganic fiber by using the electric furnace, a selection range of a raw material is wider in comparison to the cupola in which it is necessary to put a lump-shaped raw material, and thus the electric furnace is suitable. In the case of using the electric furnace, blowing is not performed, and thus a sulfur component is likely to be contained in the inorganic fiber. In addition, the cupola blows air into the raw material by using coke as a heat source and a reducing agent. From the viewpoint of environment protection, the cupola is provided with a desulfurization device. In the method of manufacturing an inorganic fiber according to this embodiment, since the transition metal compound and sulfur coexist in the inorganic fiber, a sulfur component is suppressed from being emitted into an environment.

<Method of Manufacturing Inorganic Fiber Product>

The inorganic fiber according to this embodiment is collected in a cotton collection chamber, and is defiberized and granulated into granular cotton in correspondence with a use. Alternatively, a binder is added to the inorganic fiber and is hardened in a curing furnace, the resultant inorganic fiber is adjusted to have predetermined density and thickness, and is processed into an inorganic fiber product (molded product, secondary product) having a board shape, a mat shape, a felt shape, a blanket shape, a strip shape, a tubular shape, or the like.

<Inorganic Fiber Product>

Various kinds of inorganic fiber products (secondary products) can be obtained from the inorganic fiber according to this embodiment. For example, shaped products such as bulks, blankets, blocks, ropes, yarns, woven products, inorganic fibers coated with a surfactant, shotless bulks from which shots (non-fiberized objects) are reduced or removed, boards manufactured by using a solvent such as water, molds, paper, felts, and wet felts impregnated with colloidal silica are obtained. In addition, shaped products after processing the shaped products with collide or the like are obtained. In addition, amorphous materials (mastics, casters, coating materials, and the like) manufactured by using a solvent such as water are also obtained. In addition, structures in which the shaped products, the amorphous products, and various heat-generating bodies are combined are also obtained.

Examples of specific uses of the inorganic fiber according to this embodiment include refractory coating materials for protecting steel frames or the like, heat insulating materials for various buildings, cover materials for various pipes, joint materials in heat treatment devices and furnaces such as an industrial furnace and an incinerator, joint materials for filling a gap in refractory tiles, heat insulating bricks, iron skins, refractory mortar, and the like, sealing materials, packing materials, cushioning materials, heat insulating materials, refractory materials, fireproof materials, heat reserving materials, protective materials, covering materials, filtering materials, filter materials, insulating materials, filling materials, repair materials, heat-resistant materials, non-combustible materials, soundproof materials, sound-absorbing materials, frictional materials (for example, additives for brake pads), rolls for transporting glass plates and steel plates, automobile catalyst carrier holding materials, various fiber reinforced composite materials (for example, reinforcing fibers for fiber reinforced cement, fiber reinforced plastic, and the like, reinforcing fibers for heat-resistant materials and refractory materials, reinforcing fibers for adhesives and coating materials), and the like.

[Example]

Hereinafter, the invention will be described in detail on the basis of specific examples, but the invention is not limited thereto.

<Preparation of Sample>

Reagents were mixed (total: 60 to 65 g) in compositions shown in the following Table 1 and Table 2. At this time, graphite (2 to 3 g) was added. The mixed reagents were put into a crucible, and were heated and melted in an electric furnace at 1500°C. A temperature was raised up to 1500°C and the temperature was retained for 15 to 30 minutes, and then the resultant melt was poured into water to be rapidly cooled and vitrified. Glass obtained through rapid cooling was pulverized with a mortar and a ball mill, and uniaxial press molding was performed by applying a load of 3 to 4 kN to prepare a pellet, that is, a composition (size: $\phi$7 mm $\times$ 17 mm) for manufacturing an inorganic fiber.

<Test 1: Evaluation of Heat Resistance>

(Heat Resistance)

As evaluation for heat resistance, a heating shrinkage rate of a sample was measured. Specifically, a sample was placed in an electric furnace, and was heated up to 1110°C in accordance with a temperature rising rate simulating a heating curve of ISO834. A diameter of each sample was measured before and after heating, and the shrinkage rate was measured by the dimensional change. Specifically, calculation was performed with an expression of a heating shrinkage rate (%) = (sample diameter before heating - sample diameter after heating)/sample diameter before heating $\times$ 100.

In the following discussion, in the case of performing heating under the above-described heating conditions, when the shrinkage rate can be appropriately measured without melting of a sample pellet, this is determined as existence of heat resistance.

(Results of Test 1)

Result of Test 1 are shown in Table 1, Table 2, and FIG. 1 to FIG. 3. Note that, the molar basicity P of samples in examples was 1.0 to 1.5. Note that, results of $Li_2O$ are included in Table 1. Since Li is an element that cannot be measured with fluorescent X-rays, the amount of Li was measured by the following method. A sample was dissolved in a mixed acid that was obtained by mixing sulfuric acid and hydrofluoric acid at a ratio of 5:2 and was heated, and then a masking treatment was performed with a boric acid solution. The resultant solution was diluted at an appropriate ratio and was subjected to inductively coupled plasma (ICP) analysis to quantify the amount of Li.

[Table 1]

| | Composition (% by mass) | | | | | | | | | | | | Physical properties |
|---|---|---|---|---|---|---|---|---|---|---|---|---|---|
| | $SiO_2$ | $Al_2O_3$ | CaO | MgO | $Fe_2O_3$ | $Na_2O$ | $K_2O$ | $Li_2O$ | $TiO_2$ | $SO_3$ | MnO | Total amount of alkali metal oxides | Shrinkage rate (%) |
| Example 1 | 30.6 | 12.1 | 40.6 | 7.7 | 0.1 | 4.8 | 0.2 | - | 0.9 | 2.6 | 0.3 | 5.1 | 2.7 |
| Example 2 | 31.3 | 10.9 | 42.2 | 8.2 | 0.1 | 3.5 | 0.2 | - | 0.8 | 2.3 | 0.3 | 3.8 | 2.8 |
| Example 3 | 31.5 | 13.8 | 40.0 | 8.1 | 0.5 | 2.2 | 0.2 | - | 0.8 | 2.6 | 0.3 | 2.4 | 3.0 |
| Example 4 | 29.7 | 14.5 | 36.4 | 6.5 | 0.1 | 10.2 | 0.2 | - | 0.9 | 1.3 | 0.3 | 10.4 | 3.0 |
| Example 5 | 29.2 | 16.0 | 33.4 | 6.8 | 0.1 | 11.1 | 0.2 | - | 0.8 | 2.1 | 0.3 | 11.3 | 3.1 |
| Example 6 | 28.0 | 19.6 | 32.4 | 6.4 | 0.1 | 11.4 | 0.2 | - | 0.8 | 0.9 | 0.3 | 11.6 | 3.3 |
| Example 7 | 33.2 | 12.2 | 37.8 | 7.2 | 0.1 | 4.2 | 0.3 | - | 0.9 | 3.8 | 0.2 | 4.5 | 3.4 |
| Example 8 | 30.2 | 15.6 | 34.9 | 7.0 | 0.1 | 10.0 | 0.2 | - | 0.9 | 0.7 | 0.3 | 10.2 | 3.5 |
| Example 9 | 28.4 | 15.5 | 32.6 | 6.7 | 0.1 | 12.0 | 0.2 | - | 0.8 | 3.4 | 0.3 | 12.2 | 4.3 |
| Example 10 | 29.6 | 10.4 | 35.5 | 6.4 | 0.1 | 12.7 | 0.2 | - | 0.9 | 3.9 | 0.3 | 12.9 | 4.5 |
| Example 11 | 29.6 | 12.1 | 36.8 | 6.4 | 0.1 | 10.1 | 0.2 | - | 0.8 | 3.5 | 0.3 | 10.3 | 4.5 |
| Example 12 | 32.5 | 12.9 | 38.1 | 7.0 | 0.1 | 5.5 | 0.3 | - | 0.7 | 2.6 | 0.3 | 5.8 | 4.8 |
| Example 13 | 29.2 | 15.5 | 33.8 | 6.9 | 0.1 | 9.9 | 0.2 | - | 1.0 | 3.0 | 0.3 | 10.2 | 4.9 |
| Example 14 | 31.4 | 12.4 | 36.6 | 7.1 | 0.1 | 8.5 | 0.2 | - | 0.8 | 2.6 | 0.3 | 8.8 | 4.9 |
| Example 15 | 31.4 | 14.2 | 36.2 | 7.0 | 0.1 | 8.4 | 0.2 | - | 0.7 | 1.4 | 0.3 | 8.7 | 5.0 |
| Example 16 | 31.4 | 13.2 | 36.9 | 7.1 | 0.1 | 7.1 | 0.2 | - | 0.9 | 2.8 | 0.3 | 7.3 | 5.6 |
| Example 17 | 31.8 | 14.6 | 37.2 | 7.0 | 0.8 | 4.7 | 0.3 | - | 0.8 | 2.6 | 0.3 | 4.9 | 5.6 |
| Example 18 | 33.2 | 12.8 | 38.6 | 7.5 | 0.1 | 3.9 | 0.2 | - | 0.8 | 2.5 | 0.3 | 4.2 | 6.4 |
| Example 19 | 32.2 | 13.6 | 36.8 | 7.2 | 0.0 | 6.8 | 0.2 | - | 0.8 | 2.0 | 0.3 | 7.0 | 6.8 |
| Example 20 | 28.7 | 18.6 | 35.8 | 6.2 | 0.1 | 9.0 | 0.2 | - | 0.7 | 0.4 | 0.3 | 9.2 | 8.3 |
| Example 21 | 31.8 | 14.4 | 36.7 | 7.0 | 0.1 | 8.0 | 0.2 | - | 0.8 | 0.7 | 0.3 | 8.2 | 8.3 |
| Example 22 | 32.5 | 13.3 | 37.6 | 7.0 | 0.1 | 6.9 | 0.2 | - | 0.8 | 1.3 | 0.3 | 7.1 | 8.3 |
| Example 23 | 33.0 | 13.3 | 38.1 | 7.5 | 0.1 | 5.0 | 0.2 | - | 0.7 | 1.8 | 0.3 | 5.2 | 9.6 |
| Example 24 | 30.3 | 14.5 | 39.0 | 7.3 | 0.6 | 0.2 | 4.2 | - | 0.7 | 2.8 | 0.3 | 4.4 | 3.5 |

| | Composition (% by mass) | | | | | | | | | | | | Physical properties |
|---|---|---|---|---|---|---|---|---|---|---|---|---|---|
| | $SiO_2$ | $Al_2O_3$ | CaO | MgO | $Fe_2O_3$ | $Na_2O$ | $K_2O$ | $Li_2O$ | $TiO_2$ | $SO_3$ | MnO | Total amount of alkali metal oxides | Shrinkage rate (%) |
| Example 25 | 39.4 | 14.5 | 33.7 | 6.6 | 0.1 | 2.1 | 0.3 | - | 0.9 | 2.1 | 0.3 | 2.4 | 10.6 |
| Example 26 | 33.2 | 13.2 | 38.1 | 7.6 | 0.1 | 5.3 | 0.2 | - | 0.8 | 1.2 | 0.3 | 5.5 | 10.8 |
| Example 27 | 32.4 | 13.8 | 37.8 | 7.3 | 0.1 | 6.7 | 0.2 | - | 0.8 | 0.7 | 0.3 | 6.9 | 11.6 |
| Example 28 | 37.8 | 13.5 | 38.2 | 5.0 | 0.1 | 1.6 | 0.3 | - | 0.8 | 2.3 | 0.3 | 1.9 | 12.0 |
| Example 29 | 33.2 | 12.8 | 39.1 | 7.4 | 0.1 | 5.4 | 0.2 | - | 0.9 | 0.6 | 0.3 | 5.6 | 12.2 |
| Example 30 | 33.2 | 14.2 | 37.8 | 7.3 | 0.1 | 5.3 | 0.2 | - | 0.8 | 0.6 | 0.6 | 5.5 | 12.2 |
| Example 31 | 34.7 | 12.6 | 40.3 | 7.2 | 0.0 | 2.0 | 0.2 | - | 0.8 | 1.7 | 0.4 | 2.2 | 13.6 |
| Example 32 | 32.8 | 12.3 | 41.0 | 7.5 | 0.1 | 3.7 | 0.3 | - | 1.0 | 1.0 | 0.4 | 4.0 | 13.9 |
| Example 33 | 32.8 | 11.8 | 38.2 | 7.4 | 0.1 | 3.7 | 0.3 | - | 1.0 | 4.4 | 0.3 | 3.9 | 3.3 |
| Example 34 | 32.1 | 12.5 | 42.2 | 7.3 | 0.1 | 1.1 | 0.3 | - | 0.7 | 3.5 | 0.3 | 1.4 | 5.3 |
| Example 35 | 39.1 | 14.3 | 35.6 | 6.4 | 0.1 | 0.9 | 0.3 | - | 0.8 | 2.1 | 0.3 | 1.2 | 13.7 |
| Example 36 | 34.2 | 13.6 | 39.8 | 7.0 | 0.0 | 2.0 | 0.3 | - | 0.8 | 2.3 | 0.3 | 2.2 | 10.2 |
| Example 37 | 29.9 | 17.1 | 39.6 | 7.3 | 0.1 | 0.2 | 0.2 | 2.9 | 0.9 | 1.5 | 0.3 | 3.3 | 13.3 |
| Example 38 | 31.0 | 13.2 | 40.0 | 8.3 | 0.2 | 0.2 | 0.3 | 4.0 | 0.8 | 1.5 | 0.3 | 4.5 | 11.9 |

EP 4 082 979 A1

[Table 2]

| | Composition (% by mass) | | | | | | | | | | | Physical properties |
| --- | --- | --- | --- | --- | --- | --- | --- | --- | --- | --- | --- | --- |
| | $SiO_2$ | $Al_2O_3$ | CaO | MgO | $Fe_2O_3$ | $Na_2O$ | $K_2O$ | $TiO_2$ | $SO_3$ | MnO | Total amount of alkali metal oxides | Shrinkage rate (%) |
| Comparative Example 1 | 33.3 | 13.5 | 41.3 | 7.7 | 0.1 | 1.9 | 0.3 | 1.1 | 0.5 | 0.3 | 2.2 | Melted |
| Comparative Example 2 | 30.1 | 14.3 | 41.3 | 7.4 | 0.9 | 4.8 | 0.3 | 0.8 | 0.0 | 0.0 | 5.1 | Melted |
| Comparative Example 3 | 40.1 | 14.5 | 34.0 | 4.7 | 2.4 | 1.4 | 1.0 | 0.7 | 0.6 | 0.0 | 2.4 | Melted |
| Comparative Example 4 | 40.0 | 16.1 | 33.8 | 4.6 | 1.3 | 1.2 | 1.1 | 0.8 | 0.7 | 0.3 | 2.3 | Melted |
| Comparative Example 5 | 41.9 | 11.9 | 38.0 | 5.4 | 0.1 | 0.0 | 0.3 | 0.5 | 1.6 | 0.2 | 0.3 | Melted |
| Comparative Example 6 | 30.1 | 14.3 | 40.5 | 7.8 | 0.8 | 0.3 | 5.4 | 0.9 | 0.0 | 0.0 | 5.6 | Melted |
| Comparative Example 7 | 28.7 | 14.6 | 33.5 | 6.3 | 0.1 | 13.6 | 0.2 | 0.9 | 1.9 | 0.3 | 13.8 | Crystallized |
| Comparative Example 8 | 31.5 | 11.8 | 37.6 | 7.5 | 0.0 | 3.8 | 0.3 | 1.0 | 6.3 | 0.3 | 4.0 | Crystallized |
| Comparative Example 9 | 29.7 | 7.4 | 36.3 | 5.7 | 0.1 | 13.5 | 0.2 | 0.7 | 5.9 | 0.3 | 13.8 | Crystallized |
| Comparative Example 10 | 32.0 | 12.5 | 37.6 | 7.2 | 0.1 | 3.6 | 0.2 | 0.9 | 5.5 | 0.3 | 3.8 | Crystallized |
| Comparative Example 11 | 40.0 | 12.2 | 38.4 | 3.8 | 1.2 | 1.0 | 1.3 | 0.6 | 1.4 | 0.2 | 2.3 | Melted |

EP 4 082 979 A1

FIG. 1 is a graph obtained by plotting the total amount A (% by mass) of alkali metal oxides of each sample in the horizontal axis, and the weight S (% by mass) of a sulfuric acid compound expressed by $SO_3$ in the vertical axis. An upper drawing in FIG. 1 is a graph obtained by extracting samples in which a heating shrinkage rate at 1110°C is 14% or less among respective samples. In addition, a lower drawing in FIG. 1 is a graph obtained by extracting samples melted at 1110°C.

As indicated by a broken line in FIG. 1, in samples having excellent heat resistance (the shrinkage rate at 1110°C is 14% or less), A and S satisfied the following Expression (1) or (2).

$$S \geq -0.38A + 2.4 \quad (A < 5\% \text{ by mass}) \quad (1)$$

$$S \geq 0.5 \quad (A \geq 5\% \text{ by mass}) \quad (2)$$

When considering plotting of comparative examples (melted or crystallized), it could be seen that the lower limit of the total amount A (% by mass) of alkali metal oxides was 1.0% by mass, the upper limit thereof was 13% by mass, the lower limit of the weight S (% by mass) of the sulfur oxide expressed by $SO_3$ was 0.5% by mass, and the upper limit thereof was 5% by mass.

An upper drawing in FIG. 2 is a graph obtained by extracting samples in which the heating shrinkage rate at 1110°C is 12% or less among respective samples. In addition, a lower drawing in FIG. 2 is a graph obtained by extracting samples in which the heating shrinkage rate at 1110°C is greater than 12% and equal to or less than 14%.

As indicated by a broken line in FIG. 2, in samples having more excellent heat resistance (the heating shrinkage rate at 1110°C is 12% or less), A and S satisfied the following Expression (3) or (4).

$$S \geq -0.33A + 2.8 \quad (A < 7\% \text{ by mass}) \quad (3)$$

$$S \geq 0.5 \quad (A \geq 7\% \text{ by mass}) \quad (4)$$

An upper drawing in FIG. 3 is a graph obtained by extracting samples in which the heating shrinkage rate at 1110°C is 10% or less among respective samples. In addition, a lower drawing in FIG. 3 is a graph obtained by extracting samples in which the heating shrinkage rate at 1110°C is greater than 10% and equal to or less than 12%.

As indicated by a broken line in FIG. 3, in samples having more excellent heat resistance (the heating shrinkage rate at 1110°C is 10% or less), A and S satisfied the following Expression (5) or (6).

$$S \geq -0.36A + 3.4 \quad (A < 8\% \text{ by mass}) \quad (5)$$

$$S \geq 0.5 \quad (A \geq 8\% \text{ by mass}) \quad (6)$$

<Test 2: Examination on Effect of Transition Metal Compound>

Samples were prepared in a similar manner as in the above-described procedure except that reagents were mixed in compositions shown in Table 3 and Table 4, and evaluation of the heat resistance was performed by a similar method. Results are shown in Table 3, Table 4, and FIG. 4. Note that, the molar basicity P of the samples in examples was 1.0 to 1.4.

[Table 3]

| | Composition (% by mass) | | | | | | | | | | | | Physical properties |
| | SiO$_2$ | Al$_2$O$_3$ | CaO | MgO | Fe$_2$O$_3$ | Na$_2$O | K$_2$O | TiO$_2$ | SO$_3$ | MnO | Total amount of alkali metal oxides | Alkali + transition metal | Shrinkage rate (%) |
|---|---|---|---|---|---|---|---|---|---|---|---|---|---|
| Example 39 | 30.5 | 12.5 | 37.8 | 7.1 | 1.1 | 7.6 | 0.2 | 0.9 | 1.9 | 0.3 | 7.9 | 9.2 | 6.2 |
| Example 40 | 29.7 | 14.9 | 38.3 | 7.5 | 1.4 | 4.4 | 0.2 | 0.7 | 2.5 | 0.3 | 4.6 | 6.4 | 2.8 |
| Example 41 | 32.8 | 13.2 | 37.1 | 7.2 | 1.4 | 4.0 | 0.3 | 1.2 | 2.3 | 0.4 | 4.3 | 6.1 | 4.3 |
| Example 42 | 30.5 | 13.7 | 40.2 | 7.5 | 1.5 | 2.9 | 0.2 | 0.9 | 2.3 | 0.3 | 3.1 | 4.9 | 2.6 |
| Example 43 | 30.4 | 16.8 | 36.0 | 7.2 | 1.7 | 5.9 | 0.3 | 1.0 | 0.5 | 0.3 | 6.2 | 8.1 | 9.7 |
| Example 44 | 32.0 | 14.4 | 39.0 | 6.9 | 1.9 | 2.0 | 0.3 | 1.0 | 2.1 | 0.3 | 2.3 | 4.6 | 9.0 |
| Example 45 | 30.2 | 18.6 | 34.9 | 6.9 | 2.0 | 5.3 | 0.3 | 0.8 | 0.6 | 0.3 | 5.6 | 7.9 | 9.7 |
| Example 46 | 30.4 | 17.2 | 35.2 | 7.0 | 2.0 | 5.5 | 0.3 | 0.9 | 1.3 | 0.3 | 5.7 | 8.1 | 5.5 |
| Example 47 | 35.1 | 9.9 | 36.7 | 7.0 | 2.1 | 5.8 | 0.3 | 0.9 | 1.9 | 0.3 | 6.1 | 8.5 | 7.3 |
| Example 48 | 30.2 | 14.2 | 41.1 | 7.5 | 2.2 | 2.1 | 0.3 | 1.0 | 1.1 | 0.3 | 2.4 | 4.9 | 6.3 |
| Example 49 | 25.7 | 20.1 | 34.0 | 6.4 | 2.4 | 8.7 | 0.2 | 0.7 | 1.4 | 0.3 | 8.9 | 11.6 | 4.5 |
| Example 50 | 29.9 | 18.4 | 34.5 | 6.9 | 2.5 | 5.6 | 0.2 | 0.7 | 1.0 | 0.3 | 5.8 | 8.6 | 7.9 |
| Example 51 | 29.3 | 18.8 | 33.9 | 6.9 | 2.7 | 5.6 | 0.3 | 0.9 | 1.5 | 0.3 | 5.8 | 8.8 | 4.7 |
| Example 52 | 32.7 | 16.5 | 34.2 | 6.5 | 2.7 | 4.8 | 0.3 | 0.8 | 1.1 | 0.3 | 5.1 | 8.1 | 9.8 |
| Example 53 | 30.2 | 17.3 | 35.5 | 6.9 | 3.1 | 3.8 | 0.3 | 0.9 | 1.5 | 0.4 | 4.1 | 7.6 | 4.8 |
| Example 54 | 27.6 | 14.4 | 36.3 | 7.0 | 3.7 | 8.2 | 0.2 | 0.7 | 1.5 | 0.3 | 8.4 | 12.4 | 5.1 |
| Example 55 | 29.6 | 17.1 | 34.1 | 6.9 | 4.7 | 5.7 | 0.3 | 0.8 | 0.5 | 0.3 | 6.0 | 11.0 | 7.1 |
| Example 56 | 37.3 | 15.7 | 37.6 | 3.6 | 1.5 | 1.3 | 1.0 | 0.7 | 1.2 | 0.2 | 2.2 | 3.9 | 12.2 |
| Example 57 | 32.6 | 14.5 | 38.4 | 7.1 | 0.1 | 4.6 | 0.2 | 0.8 | 0.6 | 1.0 | 4.8 | 5.9 | 8.3 |
| Example 58 | 32.4 | 14.2 | 37.2 | 7.2 | 0.2 | 5.6 | 0.2 | 0.9 | 0.6 | 1.5 | 5.8 | 7.5 | 6.1 |
| Example 59 | 32.3 | 15.3 | 37.6 | 7.1 | 0.2 | 3.7 | 0.2 | 0.8 | 0.6 | 2.0 | 3.9 | 6.2 | 5.5 |
| Example 60 | 31.4 | 14.4 | 36.9 | 6.7 | 0.3 | 5.3 | 0.2 | 0.9 | 1.7 | 2.1 | 5.5 | 7.9 | 7.8 |

(continued)

| | Composition (% by mass) | | | | | | | | | | | | Physical properties |
| | SiO$_2$ | Al$_2$O$_3$ | CaO | MgO | Fe$_2$O$_3$ | Na$_2$O | K$_2$O | TiO$_2$ | SO$_3$ | MnO | Total amount of alkali metal oxides | Alkali + transition metal | Shrinkage rate (%) |
|---|---|---|---|---|---|---|---|---|---|---|---|---|---|
| Example 61 | 31.7 | 12.0 | 39.7 | 7.5 | 0.2 | 3.8 | 0.3 | 0.8 | 1.7 | 2.3 | 4.1 | 6.5 | 6.7 |
| Example 62 | 32.0 | 13.9 | 37.5 | 7.0 | 0.3 | 5.2 | 0.2 | 0.6 | 0.6 | 2.8 | 5.4 | 8.4 | 6.0 |
| Example 63 | 31.6 | 13.4 | 40.3 | 7.3 | 0.3 | 1.8 | 0.3 | 1.0 | 1.5 | 2.4 | 2.1 | 4.9 | 11.5 |
| Example 64 | 32.7 | 13.6 | 39.6 | 7.3 | 0.3 | 1.6 | 0.3 | 0.9 | 0.5 | 3.3 | 1.9 | 5.4 | 1.25 |
| Comparative Example 12 | 30.9 | 18.4 | 37.2 | 7.4 | 2.5 | 2.1 | 0.3 | 0.7 | 0.1 | 0.3 | 2.3 | 5.2 | Melted |
| Comparative Example 13 | 27.9 | 21.7 | 36.2 | 6.5 | 2.4 | 3.7 | 0.3 | 0.9 | 0.1 | 0.3 | 4.0 | 6.8 | Melted |
| Comparative Example 14 | 32.5 | 13.9 | 40.3 | 7.5 | 0.2 | 1.8 | 0.2 | 0.8 | 0.5 | 2.2 | 2.1 | 4.4 | Melted |

[Table 4]

| | Composition (% by mass) | | | | | | | | | | |
|---|---|---|---|---|---|---|---|---|---|---|---|
| | $SiO_2$ | $Al_2O_3$ | CaO | MgO | $Fe_2O_3$ | $Na_2O$ | $K_2O$ | $Li_2O$ | $TiO_2$ | $SO_3$ | MnO |
| Example 65 | 28.7 | 21.4 | 28.5 | 12.5 | 0.1 | 1.9 | 0.3 | 0.0 | 0.9 | 2.2 | 0.0 |
| Example 66 | 30.9 | 13.2 | 41.8 | 7.3 | 0.0 | 1.8 | 0.3 | 0.0 | 1.0 | 2.6 | 0.0 |
| Example 67 | 31.1 | 13.3 | 39.9 | 8.0 | 0.1 | 2.1 | 0.3 | 0.0 | 0.9 | 2.3 | 0.2 |
| Example 68 | 29.7 | 11.4 | 40.3 | 7.9 | 0.1 | 2.1 | 0.3 | 0.0 | 0.9 | 2.1 | 0.3 |
| Example 69 | 29.7 | 13.8 | 39.2 | 7.5 | 0.1 | 1.6 | 0.3 | 0.0 | 0.8 | 1.9 | 0.2 |
| Example 70 | 43.8 | 7.7 | 19.3 | 19.4 | 0.1 | 1.8 | 0.3 | 0.0 | 0.7 | 2.3 | 0.3 |
| Example 71 | 29.8 | 12.1 | 43.9 | 5.5 | 0.1 | 2.0 | 0.3 | 0.0 | 0.8 | 1.9 | 0.3 |
| Example 72 | 31.0 | 13.4 | 41.1 | 8.2 | 0.1 | 1.8 | 0.3 | 0.0 | 0.9 | 1.6 | 0.3 |
| Example 73 | 30.5 | 12.0 | 39.5 | 7.6 | 0.1 | 1.9 | 0.3 | 0.0 | 0.8 | 2.3 | 0.0 |

| | Composition (% by mass) | | | | | | | | | | | Physical properties |
| | CuO | NiO | CoO | ZrO$_2$ | V$_2$O$_5$ | Nb$_2$O$_5$ | MoO$_2$ | WO$_2$ | Y$_2$O$_3$ | Total amount of alkali metal oxides | Alkali + transition metal | Shrinkage rate (%) |
|---|---|---|---|---|---|---|---|---|---|---|---|---|
| Example 65 | 3.3 | - | - | - | - | - | - | - | - | 2.2 | 5.6 | 3.2 |
| Example 66 | - | 1.1 | - | - | - | - | - | - | - | 2.1 | 3.2 | 6.7 |
| Example 67 | - | - | 1.6 | - | - | - | - | - | - | 2.4 | 4.3 | 9.4 |
| Example 68 | - | - | - | 4.8 | - | - | - | - | - | 2.4 | 7.5 | 7.6 |
| Example 69 | - | - | - | - | 4.7 | - | - | - | - | 1.9 | 7.0 | 6.9 |
| Example 70 | - | - | - | - | - | 4.3 | - | - | - | 2.0 | 6.7 | 7.8 |
| Example 71 | - | - | - | - | - | - | 3.3 | - | - | 2.3 | 6.0 | 5.2 |
| Example 72 | - | - | - | - | - | - | - | 1.2 | - | 2.1 | 3.7 | 10.6 |
| Example 73 | - | - | - | - | - | - | - | - | 4.9 | 2.2 | 7.2 | 5.3 |

As illustrated in FIG. 4, even in the case of plotting the total amount A (% by mass) of alkali metal oxides + the content T (% by mass) of a transition metal compound in the horizontal axis, a similar behavior as in the results in FIG. 1 was obtained. That is, in Expressions (1) to (6), it could be seen that the total amount A (% by mass) of the alkali metal oxides may be substituted with the total amount A (% by mass) of the alkali metal oxides + the content T (% by mass) of the transition metal compound.

<Test 3: Measurement for Existing Fiber>

FIG. 5 illustrates a graph obtained by plotting the total amount A (% by mass) of alkali metal oxides in the horizontal axis and the weight S (% by mass) of sulfur oxide expressed by $SO_3$ in the vertical axis with respect to existing inorganic fibers. Any of the existing inorganic fibers did not pertain to the ranges defined by Expressions (1) and (2).

In a composition of typical existing inorganic fiber (for example, rock wool, rock wool, stone wool, slag wool, mineral wool, glass wool, and mineral glass wool), as illustrated in FIG. 5, the amount of sulfur is small when the amount of alkali metals is large, and the amount of alkali metals is small when the amount of sulfur is large. This is caused by a raw material composition. The amount of alkali metals is large in the case of using a large amount of natural minerals, and the amount of sulfur is typically small in the natural minerals. In addition, the amount of sulfur is large when using a large amount of slag, and the amount of alkali metals is small in the slag. That is, alkali metals and sulfur are treated as impurities in the case of manufacturing rock wool, and there is no technical idea of simultaneously increasing both alkali metals and sulfur. The present inventors newly found that when simultaneously increasing both alkali metal and sulfur, the heat resistance is significantly improved due to the above-described reason as a heat resistance exhibition mechanism. The heat resistance exhibition mechanism cannot be easily conceived from the technical idea in the related art.

<Test 4: Evaluation of Crystallization Peak Temperature>

Measurement was performed with respect to Example 12, Example 18, and Example 36 among the samples in Test 1.

The crystallization peak temperature of samples was obtained by an exothermic peak temperature when being heated up to 1000°C at a temperature rising rate of 20°C/minute by using the differential thermal analyzer (DTA).

(Results of Test 4)

Crystallization peak temperatures of the samples were 810°C (Example 12), 847°C (Example 18), and 902°C (Example 36). Results of Test 4 are illustrated in FIG. 6 and FIG. 7.

FIG. 6 is a graph obtained by plotting the total amount A of alkali metal oxides in the respective samples (the weight S of the sulfur oxide expressed by $SO_3$ is 2.3% by mass to 2.6% by mass) in Test 1 in the horizontal axis and the crystallization peak temperature in the vertical axis. As illustrated in FIG. 6, it could be seen that the higher the total amount A of the alkali metal oxides is, the lower the crystallization peak temperature is and crystallization is promoted.

FIG. 7 is a graph obtained by plotting the crystallization peak temperature of the respective samples in Test 4 in the horizontal axis and the heating shrinkage rate at 1110°C in the vertical axis. As illustrated in FIG. 7, it could be seen that the lower the crystallization peak temperature is, the lower the heating shrinkage rate is and the further the heat resistance is improved.

<Test 5: Measurement of Melt Viscosity>

With respect to samples (Example 82, Example 18, Example 23, Example 21, and Example 74, respectively) in which the total amount A of alkali metal oxides is 3.6, 4.2, 5.2, 8.2, and 10.7, melt viscosity was measured. Measurement was performed by using a typical ball pull-up type viscometer, a platinum ball connected to a platinum wire was submerged in the melt maintained at a constant temperature, and viscosity was obtained from a load when pulling up the platinum ball at a predetermined speed.

(Results of Test 5)

Results of Test 5 are shown in the following Table 5. In any sample, there was a temperature range of approximately 150°C to 200°C until measurement of viscosity became difficult. In addition, the higher the total amount A of alkali metal oxides is, the further the temperature range until measurement of the viscosity became difficult tends to broaden.

[Table 5]

| Example | Example 18 | Example 23 | Example 21 | Example 74 | Example 82 |
|---|---|---|---|---|---|
| Total amount of alkali metal oxides | 4.2 | 5.2 | 8.2 | 10.7 | 3.6 |
| 1500°C | 8.7 | 9.3 | 7.3 | 9.6 | 8.7 |
| 1450°C | 9.4 | 9.6 | 7.4 | 10.2 | 9.7 |
| 1425°C | 9.6 | | | 11.2 | 11.1 |
| 1400°C | 10.4 | 13.8 | 8.9 | 11.2 | 11.8 |
| 1375°C | 11.1 | 13.7 | | 12.9 | 16.2 |
| 1350°C | 69.0 | 15.7 | 10.4 | 14.2 | 115.8 |
| 1325°C | Measurement was difficult | 23.8 | 14.9 | 42.5 | Measurement was difficult |
| 1300°C | | Measurement was difficult | 23.6 | Measurement was difficult | |
| 1275°C | | | Measurement was difficult | | |

Viscosity when a raw material is melted is an index that greatly affects manufacturability of the inorganic fiber. When manufacturing the inorganic fiber, a raw material is melted in a cupola or an electric furnace, and a melt maintained at approximately 1500°C is allowed to flow out from the bottom of the furnace, and is fiberized by a spinning method or a blowing method. The melt is stretched in a fiberization process, but the melt is cooled down in the process. That is, for satisfactory fiberization, it is preferable that an increase in viscosity in accordance with a decrease in a temperature of the melt is gradual. Accordingly, from the results of Test 5, it could be seen that when the total amount A of alkali metal oxides is at least within a range of 3.6 to 10.7 ($3.6 \leq A \leq 10.7$), the inorganic fiber can be fiberized in a satisfactory manner. This is also supported by the following fact. In Example 82 in which the total amount of the alkali metal oxides is 3.6 and Example 74 in which the total amount is 10.7, when actually manufacturing a fiber, it could be confirmed that fiberization is satisfactory.

<Summary of Tests 1 to 5>

From the above-described results, it was newly found that the total amount A (% by mass) of the alkali metal oxides and the weight S (% by mass) of the sulfur oxide expressed by $SO_3$ affect the heat resistance of rock wool, respectively. Specifically, in rock wool and a composition for manufacturing rock wool, when the total amount A (% by mass) of the alkali metal oxides and the weight S (% by mass) of the sulfur oxide expressed by $SO_3$ are within the above-described predetermined ranges, microcrystals exist before being softened and deformed due to heating, softening does not proceed and curvature and fusion of the fiber do not occur even when being exposed to a high temperature of 1100°C or higher.

<Test 6: Preparation of Inorganic Fiber >

Hereinafter, with regard to the composition for an inorganic fiber, described so far, based on the specific examples, an inorganic fiber was actually manufactured, and heat resistance was measured. The relationship illustrated in FIG. 1 to FIG. 3 was verified by an actual fiber. Note that, the invention is not limited thereto.

<Preparation of Fiber>

In compositions shown in Table 6, natural stones such as basalt, and various raw materials such as slag, silica, and soda ash were poured into an electric furnace or cupola, and the raw materials were melted by a similar method as in a method of manufacturing a typical fiber. Then, the melted raw materials were allowed to flow out from the bottom of the furnace and were fiberized by a spinning method. A binder adhered to the fiber, and an inorganic fiber molded body (volume density: 0.08 to 0.12 g/cm$^3$) was obtained by allowing the fiber to pass through a curing furnace.

<Evaluation of Heat Resistance>

As an evaluation for the heat resistance, a heating shrinkage rate of the fiber molded body was measured. Specifically, a molded body sample cut to 50 mm $\times$ 50 mm was placed in an electric furnace, and the sample was heated up to 1110°C in accordance with a temperature rising rate simulating a heating curve of ISO834. Lengths of the sample in a vertical direction and a horizontal direction were measured before and after heating, and the shrinkage rate was measured by the dimensional change. Specifically, calculation was performed with an expression of a heating shrinkage rate (%) = (sample length before heating - sample length after heating)/sample length before heating $\times$ 100. Note that, a shrinkage rate shown in Table 6 is an average value of a shrinkage rate in the vertical direction and a shrinkage rate in the horizontal direction.

Results of the above-described test are shown in Table 6, and FIG. 8. Note that, the molar basicity P in examples was 1.2 to 1.4.

[Table 6]

| | Composition (% by mass) | | | | | | | | | | | | Physical properties |
|---|---|---|---|---|---|---|---|---|---|---|---|---|---|
| | SiO$_2$ | Al$_2$O$_3$ | CaO | MgO | Fe$_2$O$_3$ | Na$_2$O | K$_2$O | TiO$_2$ | SO$_3$ | MnO | Total amount of alkali metal oxides | Alkali + transition metal | Shrinkage rate (%) |
| Example 74 | 30.7 | 12.6 | 37.6 | 5.3 | 0.4 | 10.4 | 0.4 | 0.7 | 1.7 | 0.2 | 10.7 | 11.3 | 3.1 |
| Example 75 | 30.3 | 12.9 | 38.7 | 5.4 | 0.4 | 9.4 | 0.4 | 0.7 | 1.6 | 0.2 | 9.7 | 10.3 | 5.5 |
| Example 76 | 31.2 | 13.0 | 39.1 | 5.7 | 0.4 | 7.6 | 0.3 | 0.7 | 1.6 | 0.2 | 7.9 | 8.5 | 9.3 |
| Example 77 | 32.5 | 13.5 | 39.0 | 5.9 | 0.3 | 5.9 | 0.3 | 0.7 | 1.6 | 0.2 | 6.2 | 6.7 | 9.8 |
| Example 78 | 30.8 | 13.0 | 43.3 | 5.2 | 0.1 | 4.5 | 0.2 | 0.8 | 1.8 | 0.3 | 4.7 | 5.1 | 9.6 |
| Example 79 | 30.9 | 13.1 | 38.5 | 5.4 | 0.3 | 9.1 | 0.3 | 0.7 | 1.5 | 0.2 | 9.3 | 9.8 | 4.7 |
| Example 80 | 31.5 | 13.5 | 38.4 | 5.4 | 0.3 | 8.2 | 0.3 | 0.7 | 1.5 | 0.2 | 8.5 | 9.0 | 8.1 |
| Example 81 | 30.9 | 13.0 | 42.0 | 5.5 | 0.2 | 5.7 | 0.3 | 0.5 | 1.5 | 0.2 | 5.9 | 6.3 | 8.7 |
| Example 82 | 31.5 | 13.4 | 43.1 | 5.6 | 0.2 | 3.3 | 0.3 | 0.7 | 1.6 | 0.2 | 3.6 | 4.0 | 11.5 |
| Comparative Example 15 | 45.6 | 10.0 | 35.0 | 2.3 | 1.9 | 1.7 | 2.2 | 0.6 | 0.3 | 0.1 | 3.8 | 5.8 | Melted |
| Comparative Example 16 | 40.7 | 14.5 | 35.3 | 4.3 | 1.2 | 1.1 | 1.0 | 0.9 | 0.7 | 0.2 | 2.1 | 3.5 | Melted |
| Comparative Example 17 | 41.3 | 11.1 | 39.1 | 5.3 | 0.1 | 0.3 | 0.3 | 0.8 | 1.4 | 0.1 | 0.6 | 0.8 | Melted |

As illustrated in FIG. 8, in the case of plotting the total amount A (% by mass) of alkali metal oxides + the content T (% by mass) of a transition metal compound in the horizontal axis, a similar behavior as in the results of the above-described composition for an inorganic fiber as illustrated in FIG. 4 was obtained.

Note that, a broken line in the drawing is obtained by substituting a portion of A in Expressions (1) or (2) with A+T.

$$S \geq -0.38A + 2.4 \ (A < 5\% \text{ by mass}) \ (1)$$

$$S \geq 0.5 \ (A \geq 5\% \text{ by mass}) \ (2)$$

As illustrated in FIG. 8, it could be confirmed that evaluation results for a fiber molded body tends to match the results of the above-described composition for manufacturing an inorganic fiber. That is, it could be confirmed that the relationship between the heat resistance and the composition is established not only in the composition for an inorganic fiber but also in the inorganic fiber, and thus it is considered that probability is extremely high.

Examples having approximately the same composition were compared with each other so as to confirm whether there is a correlation between the composition (pellet) for an inorganic fiber and the shrinkage rate of the inorganic fiber. FIG. 9 is obtained by plotting examples relating to the inorganic fiber in a graph of examples relating to the composition for an inorganic fiber.

In FIG. 9, it can be determined that examples surrounded by a broken line have approximately the same composition, and the composition and the shrinkage rate are described in the following Table 7. FIG. 10 illustrates a relationship between shrinkage rates, and it could be confirmed that the composition for an inorganic fiber and the inorganic fiber have a high correlation. Accordingly, the heat resistance of the composition for an inorganic fiber is an index showing the heat resistance of the inorganic fiber.

**Claims**

1.  An inorganic fiber, containing:

    at least one kind of alkali metal compound selected from the group consisting of Na, K, and Li, and a sulfur compound,
    wherein a total amount A (% by mass) of alkali metal oxides expressed by $Na_2O$, $K_2O$, and $Li_2O$ and a weight S (% by mass) of a sulfur oxide expressed by $SO_3$ in terms of oxides satisfy the following Expression (1) or (2).

$$S \geq -0.38A + 2.4 \ (A < 5\% \text{ by mass}) \ (1)$$

$$S \geq 0.5 \ (A \geq 5\% \text{ by mass}) \ (2)$$

2.  The inorganic fiber according to claim 1, further containing:
    0.1% by mass to 5% by mass of transition metal compound.

3.  The inorganic fiber according to claim 2,
    wherein the transition metal compound is at least one kind of compound selected from the group consisting of Fe, Mn, Cu, Ni, Co, Zr, V, Nb, Mo, W, and Y.

4.  The inorganic fiber according to any one of claims 1 to 3, the inorganic fiber having a composition containing:

    25% by mass to 45% by mass of $SiO_2$;
    5% by mass to 25% by mass of $Al_2O_3$;
    15% by mass to 50% by mass of CaO;
    3% by mass to 20% by mass of MgO;
    0.1% by mass to 5% by mass of transition metal compound;
    0.5% by mass to 5% by mass of $SO_3$; and
    1% by mass to 13% by mass of $Na_2O$, $K_2O$, and $Li_2O$.

5. The inorganic fiber according to any one of claims 1 to 4,
wherein the inorganic fiber is at least one or more kinds selected from the group consisting of rock wool, stone wool, slag wool, mineral wool, glass wool, and mineral glass wool.

6. An inorganic fiber product, comprising:
the inorganic fiber according to any one of claims 1 to 5.

7. The inorganic fiber product according to claim 6,
wherein the inorganic fiber product is a heat insulating material or a refractory material.

8. A method of manufacturing an inorganic fiber product, comprising:
molding the inorganic fiber according to any one of claims 1 to 5.

9. A composition for manufacturing an inorganic fiber, containing:

at least one kind of alkali metal compound selected from the group consisting of Na, K, and Li, and a sulfur compound,
wherein a total amount A (% by mass) of alkali metal oxides expressed by $Na_2O$, $K_2O$, and $Li_2O$ and a weight S (% by mass) of a sulfur oxide expressed by $SO_3$ in terms of oxides satisfy the following Expression (1) or (2).

$$S \geq -0.38A + 2.4 \ (A < 5\% \ \text{by mass}) \ (1)$$

$$S \geq 0.5 \ (A \geq 5\% \ \text{by mass}) \ (2)$$

10. A method of manufacturing an inorganic fiber, comprising:

melting the composition for manufacturing an inorganic fiber according to claim 9; and
making the resultant melt into a fiber to obtain an inorganic fiber.

# FIG. 1

# FIG. 2

# FIG. 3

# FIG. 4

# FIG. 5

# FIG. 6

CRYSTALLIZATION PEAK TEMPERATURE (°C)

920
900
880
860
840
820
800
780

CONTENT S OF SO$_3$
2.3% BY MASS TO 2.6% BY MASS

0    1    2    3    4    5    6    7

TOTAL AMOUNT A OF ALKALI METAL OXIDES
(% BY MASS)

# FIG. 7

# FIG. 8

# FIG. 9

# FIG. 10

**INTERNATIONAL SEARCH REPORT**

| International application No. |
| --- |
| PCT/JP2020/047597 |

A. CLASSIFICATION OF SUBJECT MATTER
C03C 13/00(2006.01)i; C03C 13/02(2006.01)i; C03C 13/06(2006.01)i; D01F 9/08(2006.01)i
FI: C03C13/00; C03C13/02; C03C13/06; D01F9/08 A
According to International Patent Classification (IPC) or to both national classification and IPC

B. FIELDS SEARCHED

Minimum documentation searched (classification system followed by classification symbols)
C03C1/00-14/00; C03B37/00; D01F9/08

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms USed)
INTERGLAD

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 55-113646 A (SAINT-GOBAIN INDUSTRIES) 02 September 1980 (1980-09-02) table 1, component 1-3, page 2, lower right column, line 2 to page 3, upper left column, line 2, page 3, lower right column, line 14 to page 4, upper left column, line 8, page 12, lower right column, lines 5-10, page 13, upper left column, lines 14-18, 5, claims 1-4 | 1-3, 5-10<br>4 |
| X<br>A | US 5523264 A (OWENS-CORNING FIBERGLAS TECHNOLOGY, INC.) 04 June 1996 (1996-06-04) table, ingredient no. 1, column 1, lines 43-58, claims | 1-3, 5-10<br>4 |
| A | JP 2019-119615 A (NIPPON ELECTRIC GLASS CO., LTD.) 22 July 2019 (2019-07-22) entire text | 1-10 |
| A | US 2002/0077243 A1 (EVANITE FIBER CORPORATION) 20 June 2002 (2002-06-20) entire text | 1-10 |
| A | JP 2000-502151 A (OWENS CORNING) 22 February 2000 (2000-02-22) entire text | 1-10 |

| ☒ | Further documents are listed in the continuation of Box C. | ☒ | See patent family annex. |
| --- | --- | --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, USe, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvioUS to a person skilled in the art
"&" document member of the same patent family

| Date of the actual completion of the international search | Date of mailing of the international search report |
| --- | --- |
| 24 February 2021 (24.02.2021) | 09 March 2021 (09.03.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2020/047597 |

C (Continuation).   DOCUMENTS CONSIDERED TO BE RELEVANT

| Category* | Citation of document, with indication, where appropriate, of the relevant passages | Relevant to claim No. |
|---|---|---|
| A | US 2005/0263925 A1 (HESELTINE, Robert) 01 December 2005 (2005-12-01) entire text | 1-10 |
| A | EP 1048625 A1 (POUGLAS, S. A.) 02 November 2000 (2000-11-02) entire text | 1-10 |
| A | US 2009/0178439 A1 (BAUER, Jon) 16 July 2009 (2009-07-16) entire text | 1-10 |

Form PCT/ISA/210 (continuation of second sheet) (January 2015)

**INTERNATIONAL SEARCH REPORT**
Information on patent family members

| International application no. |
| --- |
| PCT/JP2020/047597 |

| Patent Documents referred in the Report | Publication Date | Patent Family | Publication Date |
| --- | --- | --- | --- |
| JP 55-113646 A | 02 Sep. 1980 | US 4203745 A table I, constituent 1-3, 5, column 1, lines 30-55, column 3, lines 8-23, column 15, line 33 to column 16, line 2, column 16, lines 31-36, claims 4-7 GB 2041910 A FR 2443436 A | |
| US 5523264 A | 04 Jun. 1996 | WO 1996/030313 A1 table, ingredients no. 1, page 1, line 29 to page 2, line 8, claims AU 5374595 A | |
| JP 2019-119515 A | 22 Jul. 2019 | (Family: none) | |
| US 2002/0077243 A | 20 Jun. 2002 | (Family: none) | |
| JP 2000-502151 A | 22 Feb. 2000 | US 5658836 A whole document WO 1997/020782 A1 AU 1409097 A KR 10-1999-0071914 A CN 1203569 A | |
| US 2005/0263925 A1 | 01 Dec. 2005 | (Family: none) | |
| EP 1048625 A1 | 02 Nov. 2000 | ES 2153972 A whole document AT 257132 T DK 1048625 T | |
| US 2009/0173439 A1 | 16 Jul. 2009 | EP 2090550 A1 whole document | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H645472 B
- JP H665617 B

- WO 2012176799 A